# EUROPÄISCHE PATENTSCHRIFT

(11) **EP 3 386 820 B1**
(45) Veröffentlichungstag und Bekanntmachung des Hinweises auf die Patenterteilung: **01.09.2021**
(21) Anmeldenummer: 16809742.6
(22) Anmeldetag: 07.12.2016
(51) Int. Cl.: B60T 17/22, B60T 8/88, B60T 13/66

(54) **VERFAHREN ZUR DETEKTION UND KOMPENSATION EINER LECKAGE IN EINER BREMSVORRICHTUNG**
METHOD FOR DETECTION OF AND COMPENSATION FOR A LEAK IN A BRAKE DEVICE
PROCÉDÉ DE DÉTECTION ET DE COMPENSATION D'UNE FUITE DANS UN SYSTÈME DE FREINAGE

(30) Priorität: 10.12.2015 DE 102015121480
(43) Veröffentlichungstag der Anmeldung: 17.10.2018
(73) Patentinhaber: KNORR-BREMSE Systeme für Nutzfahrzeuge GmbH, 80809 München (DE)
(72) Erfinder: NOLLER, Moritz, 74321 Bietigheim-Bissingen (DE)
(86) Internationale Anmeldenummer: PCT/EP2016/079993
(87) Internationale Veröffentlichungsnummer: WO 2017/097797

(56) Entgegenhaltungen:
- EP-A1- 1 112 906
- EP-A2- 0 937 617
- EP-A2- 0 937 618
- DE-A1- 19 827 943
- GB-A- 2 297 134
- US-A- 5 004 300
- US-A- 5 979 997
- US-A1- 2003 192 376

## Beschreibung

Die Erfindung betrifft ein Verfahren zur Detektion und Kompensation einer Leckage in einer elektro-pneumatischen, eine ABS-Regelung aufweisenden Bremsvorrichtung gemäß dem Oberbegriff von Anspruch 1 sowie eine elektro-pneumatische, eine ABS-Regelung aufweisende Bremsvorrichtung eines Fahrzeugs mit einem in einem elektronischen Steuergerät implementierten Algorithmus zur Detektion und Kompensation einer Leckage gemäß dem Oberbegriff von Anspruch 10.

Eine solche Bremsvorrichtung ist z.B. aus der DE 198 14 867 C2 bekannt. Solche, eine ABS-Regelung aufweisenden Bremsvorrichtung weist an der Vorderachse meist ein 1-Kanal-Druckregelmodul mit integriertem elektronischen Steuergerät, einen ersten Bremszylinder (z.B. für die rechte Fahrzeugseite) und einen zweiten Bremszylinder (z.B. für die linke Fahrzeugseite), sowie eine erste pneumatische Bremsleitung und eine zweite pneumatische Bremsleitung auf, wobei die erste pneumatische Bremsleitung zwischen einem ersten Ausgang des Kanals des Druckregelmoduls und dem ersten pneumatischen Bremszylinder und eine zweite pneumatische Bremsleitung zwischen einem zweiten Ausgang des Kanals des Druckregelmoduls und dem zweiten pneumatischen Bremszylinder gezogen ist. Weiterhin weist die Bremsvorrichtung für die Räder der Vorderachse ein erstes ABS-Drucksteuerventil und ein zweites ABS-Drucksteuerventil auf, wobei das erste ABS-Drucksteuerventil in der ersten pneumatischen Bremsleitung und das zweite ABS-Drucksteuerventil in der zweiten pneumatischen Bremsleitung angeordnet ist und wobei die ABS-Drucksteuerventile von dem elektronischen Steuergerät im Rahmen der ABS-Regelung unabhängig voneinander in die Zustände "Druckhalten", "Druckabbauen" und "Druckaufbauen" steuerbar sind. Auf ein einen Soll-Bremsdruck repräsentierendes Bremssignal hin steuert das elektronische Steuergerät eine elektromagnetische Ventileinrichtung im Druckregelmodul an, um einen Ist-Bremsdruck in die pneumatischen Leitungen einzusteuern. Weiterhin ist in dem 1-Kanal-Druckregelmodul ein Drucksensor integriert, welcher einen vom Druckregelmodul in die erste und zweite pneumatische Leitung eingesteuerten Ist-Bremsdruck erfasst und ein den Ist-Bremsdruck repräsentierendes Drucksignal in das elektronische Steuergerät einsteuert, wobei der Drucksensor vom Druckregelmodul aus gesehen dem ersten und dem zweiten ABS-Drucksteuerventil vorgeordnet ist. Eine in dem elektronischen Steuergerät implementierte Bremsdruckregelung sorgt für einen Abgleich zwischen dem Ist-Bremsdruck und Soll-Bremsdruck, indem sie die elektromagnetische Ventileinrichtung entsprechend ansteuert. Der Drucksensor vermag daher bei inaktiver ABS-Regelung, bei welcher die ABS-Drucksteuerventile in den Zustand "Druckaufbauen" geschaltet sind, lediglich den sowohl in den ersten Bremszylinder als auch in den zweiten Bremszylinder der Vorderachse eingesteuerten Ist-Bremsdruck zu erfassen.

Beim Stand der Technik ist es bisher nicht möglich, eine Leckage in einer der zwischen dem Druckregelmodul und dem pneumatischen Bremszylinder gezogenen pneumatischen Bremsleitungen eindeutig einer dieser beiden Bremsleitungen zuzuordnen, insbesondere dahingehend, ob eine Leckage in einem vom Druckregelmodul aus gesehen dem ABS-Drucksteuerventil vorgeordneten Abschnitt der Bremsleitung oder in einem dem ABS-Drucksteuerventil nachgeordneten Abschnitt der Bremsleitung vorliegt. Genauso wenig sind Kompensationsmechanismen bekannt, durch welche ein Druckluftverlust in einer solchen Bremsleitung auf einfache Weise verhindert bzw. begrenzt werden kann.

Eine Leckage in einer Bremsleitung zwischen einem Druckregelmodul und den Bremszylindern der Vorderachse eines Fahrzeugs ist nachteilig, weil dann der der Vorderachse zugeordnete Druckluftvorrat nach einigen Bremsungen aufgebraucht wird und dadurch die Bremswirkung an der Vorderachse nachlässt. Besonders nachteilig ist dieser Effekt an der Vorderachse eines Fahrzeugs, weil diese aufgrund der dynamischen Achslastverlagerung beim Bremsen verglichen mit der dann entlasteten Hinterachse die größere Bremskraft aufbringen muss.

Der Erfindung liegt demgegenüber die Aufgabe zugrunde, ein Verfahren und eine Bremsvorrichtung der eingangs erwähnten Art derart fortzubilden, dass mit geringem Aufwand einerseits eine Detektion und Lokalisierung einer Leckage in einer Bremsleitung detektiert und andererseits die Folgen der Leckage gemindert werden können.

Diese Aufgabe wird erfindungsgemäß durch die Merkmale der nebengeordneten Ansprüche 1 und 10 gelöst.

### Offenbarung der Erfindung

Das erfindungsgemäße Verfahren bzw. die erfindungsgemäße Bremsvorrichtung basiert auf einer an sich bekannten Bremsvorrichtung beispielsweise eines Nutzfahrzeugs und insbesondere eines Zugfahrzeugs einer Zugfahrzeug-Anhängerkombination. Eine solche Bremsvorrichtung umfasst ein wenigstens einkanaliges, beispielsweise einer Vorderachse zugeordnetes Druckregelmodul mit integriertem elektronischen Steuergerät, einen ersten Bremszylinder (z.B. für die rechte Fahrzeugseite) und einen zweiten Bremszylinder (z.B. für die linke Fahrzeugseite), sowie eine erste pneumatische Bremsleitung und eine zweite pneumatische Bremsleitung, wobei die erste pneumatische Bremsleitung zwischen einem ersten Ausgang eines Kanals des Druckregelmoduls und dem ersten pneumatischen Bremszylinder und eine zweite pneumatische Bremsleitung zwischen einem zweiten Ausgang des Kanals des Druckregelmoduls und dem zweiten pneumatischen Bremszylinder gezogen ist. Weiterhin weist die Anordnung an der Vorderachse ein erstes ABS-Drucksteuerventil und ein zweites ABS-Drucksteuerventil auf, wobei das erste ABS-Drucksteuerventil in der ersten pneumatischen Bremsleitung und das zweite ABS-Drucksteuerventil in der zweiten pneumatischen Bremsleitung angeordnet ist und wobei die ABS-Drucksteuerventile von dem elektronischen Steuergerät im Rahmen der ABS-Regelung unabhängig voneinander in die Zustände "Druckhalten", "Druckabbauen" und "Druckaufbauen" steuerbar sind.

Auf ein einen Soll-Bremsdruck repräsentierendes Bremssignal hin steuert das elektronische Steuergerät eine elektromagnetische Ventileinrichtung im Druckregelmodul an, um einen Ist-Bremsdruck in die pneumatischen Leitungen einzusteuern. Weiterhin ist in dem Druckregelmodul wenigstens ein Drucksensor integriert, welcher einen vom Druckregelmodul in die erste und zweite pneumatische Leitung eingesteuerten Ist-Bremsdruck erfasst und ein den Ist-Bremsdruck repräsentierendes Drucksignal in das elektronische Steuergerät einsteuert, wobei der Drucksensor vom Druckregelmodul aus gesehen dem ersten und dem zweiten ABS-Drucksteuerventil vorgeordnet ist. Eine in dem elektronischen Steuergerät implementierte Bremsdruckregelung sorgt für einen Abgleich zwischen dem Ist-Bremsdruck und Soll-Bremsdruck, indem sie die elektromagnetische Ventileinrichtung entsprechend ansteuert.

Folglich erfasst der wenigstens eine Drucksensor den in den wenigstens einen Kanal des Druckregelmoduls eingesteuerten Ist-Bremsdruck, welcher dann in den Ausgängen des Kanals und folglich auch in den wenigstens zwei Bremsleitungen ansteht, in welchen jeweils ein ABS-Drucksteuerventil angeordnet ist und an welche jeweils ein Bremszylinder angeschlossen ist.

Dabei sind die Bauteile und Baugruppen, welche oben mit "erste" bezeichnet sind insbesondere an einer Achse eines Fahrzeugs auf einer Fahrzeugseite und die Bauteile und Baugruppen, welche oben mit "zweite" bezeichnet sind insbesondere an derselben Achse des Fahrzeugs aber auf der anderen Fahrzeugseite angeordnet. Alternativ könnten auch die Bauteile und Baugruppen, die oben mit "erste" bezeichnet sind beispielsweise an einer ersten Achse (z.B. Vorderachse) eines Fahrzeugs und die Bauteile und Baugruppen, welche oben mit "zweite" bezeichnet sind beispielsweise an einer zweiten Achse (z.B. Hinterachse) des Fahrzeugs angeordnet sein. Denkbar ist aber auch eine Konstellation, bei welcher ein Kanal eines Druckregelmoduls vier Ausgänge mit jeweils einer Bremsleitung, einem ABS-Drucksteuerventil und einem Bremszylinder aufweist, wobei über zwei Ausgänge der Bremsdruck für die Bremszylinder der Vorderachse und an zwei weiteren Ausgängen der Bremsdruck für die Bremszylinder der Hinterachse ausgegeben wird.

Eine solche Bremsvorrichtung wird nun gemäß der Erfindung beibehalten und lediglich dadurch erweitert, dass ein in dem elektronischen Steuergerät, vorzugsweise in dem oder einem elektronischen Steuergerät des Druckregelmoduls oder in einem von dem elektronischen Steuergerät des Druckregelmoduls abweichenden weiteren Steuergerät ein Algorithmus zur Detektion und Minderung der negativen Folgen einer Leckage in wenigstens einer der pneumatischen Bremsleitungen implementiert ist, welcher derart ausgebildet ist, dass er im Rahmen des erfindungsgemäßen Verfahrens wenigstens die folgenden Schritte ausführt:
a) Im Stillstand oder während der Fahrt wird ein Bremssignal in das Druckregelmodul eingesteuert.
   Dieses Bremssignal kann beispielsweise von einem elektrischen Kanal eines Fußbremswertgebers insbesondere eines Fußbremsmoduls aufgrund einer Betätigung einer Fußbremsplatte durch den Fahrer stammen oder auch von einem Fahrerassistenzsystem automatisch und ohne Zutun des Fahrers erzeugt werden. Das Bremssignal kann im Stillstand bei sich drehenden Rädern (Rollenprüfstand) oder stillstehenden Rädern z.B. im Rahmen eines Testlaufs oder während der Fahrt erzeugt werden.
   "Einsteuern des Bremssignals" bedeutet, dass ein Signal beliebiger Art in das Druckregelmodul eingesteuert wird, welches lediglich zum Ziel hat, dass das Druckregelmodul einen von einem Vorratsdruck abgeleiteten Druck in die Bremsleitungen einsteuert. Dieser Druck sollte dabei so groß sein, dass eine weiter unten beschriebene Detektion einer Leckage möglich ist. Es muss sich bei dem "Bremssignal" daher nicht unbedingt um ein Signal handeln, welches tatsächlich einen in der Praxis für eine Betriebsbremsung notwendigen Bremsdruck erzeugt.
b) Bei inaktiver ABS-Regelung wird eine Abweichung zwischen dem durch das Bremssignal repräsentierten Soll-Bremsdruck und dem von dem Drucksensor erfassten Ist-Bremsdruck ermittelt.
   "Inaktive ABS-Regelung" bedeutet, dass von dem ABS-Algorithmus festgestellt wurde, dass kein übermäßiger Bremsschlupf vorliegt und nur deshalb die betriebsbereite ABS-Regelung inaktiv ist oder aber, dass die ABS-Regelung für einen Ablauf des Verfahrens generell deaktiviert wurde.
   Falls dabei festgestellt wird, dass die ermittelte Abweichung kleiner als die vorgegebene erlaubte Abweichung ist, so wird beispielsweise das Verfahren beendet und/oder ein Signal erzeugt, welches eine erste pneumatische Bremsleitung und eine zweite pneumatische Bremsleitung repräsentiert, welche jeweils frei von Leckagen sind. Dieses Signal deutet daher auf leckagefreie Bremsleitungen hin, so dass kein Handlungsbedarf besteht.
   Falls aber dabei festgestellt wird, dass die ermittelte Abweichung größer oder gleich in Bezug auf die vorgegebene erlaubte Abweichung ist, so deutet dies auf einen Druckluftverlust und damit auf eine Leckage in einer der Bremsleitungen hin. Dann werden
c) das erste ABS-Drucksteuerventil und das zweite ABS-Drucksteuerventil in den Zustand "Druckhalten" geschaltet. Optional wird dann erneut das Bremssignal in das Druckregelmodul eingesteuert, weil das beim ersten Bremssignal erzeugte Druckluftvolumen für den gesamten Verfahrensablauf unter Umständen nicht ausreichend ist. Dann
d) wird die Abweichung zwischen dem durch das Bremssignal repräsentierten Soll-Bremsdruck und dem von dem Drucksensor erfassten Ist-Bremsdruck ermittelt.
   Falls dabei festgestellt wird, dass die Abweichung größer oder gleich in Bezug auf die vorgegebene erlaubte Abweichung ist, so deutet dies darauf hin, dass eine Leckage in einem vom Druckregelmodul aus gesehen dem zugeordneten ABS-Drucksteuerventil vorgeordneten Abschnitt einer Bremsleitung besteht. In diesem Fall wird beispielsweise das Verfahren beendet und/oder optional ein Signal erzeugt, welches eine erste pneumatische Bremsleitung und eine zweite pneumatische Bremsleitung repräsentiert, von welchen wenigstens eine pneumatische Bremsleitung von dem Druckregelmodul aus gesehen eine Leckage in dem dem zugeordneten ABS-Drucksteuerventil vorgeordneten Abschnitt aufweist. Die Folgen einer solchen Leckage können aber nicht durch ein Schalten des betreffenden ABS-Drucksteuerventils gemindert werden, so dass hier das Signal lediglich eine Detektion der Leckage ermöglicht.
   Falls aber dabei festgestellt wird, dass die ermittelte Abweichung kleiner als die vorgegebene erlaubte Abweichung ist, so deutet dies auf eine Leckage in einem Abschnitt einer Bremsleitung hin, welche vom Druckregelmodul aus gesehen dem betreffenden ABS-Drucksteuerventil nachgeordnet ist. Dann wird
e) das erste ABS-Drucksteuerventil in den Zustand "Druckaufbau" gesteuert und das zweite ABS-Drucksteuerventil in dem Zustand "Druckhalten" gehalten oder in diesen gesteuert, und
f) falls dann festgestellt wird, dass die Abweichung zwischen dem durch das Bremssignal repräsentierten Soll-Bremsdruck und dem von dem Drucksensor erfassten Ist-Bremsdruck größer oder gleich in Bezug auf die vorgegebene erlaubte Abweichung ist, dann deutet dies auf eine Leckage in dem dem ersten ABS-Drucksteuerventil nachgeordneten Abschnitt der ersten Bremsleitung hin, weil dann der Ist-Bremsdruck signifikant kleiner als der Soll-Bremsdruck ist. Optional wird dann ein Signal erzeugt, welches eine erste Bremsleitung repräsentiert, welche eine Leckage in dem dem ersten ABS-Drucksteuerventil nachgeordneten Abschnitt aufweist, gesehen vom Druckregelmodul aus.
   Dann wird das erste ABS-Drucksteuerventil vom Zustand "Druckaufbau" in den Zustand "Druckhalten" und damit in den Sperrzustand gesteuert, so dass eine Nachfuhr von Druckluft in den dem ersten ABS-Drucksteuerventil nachgeordneten Abschnitt der ersten Bremsleitung unterbunden und folglich verhindert wird, dass der Druckluftvorrat über die Leckage beim Bremsen entleert wird.
   Falls nach dem obigen Schritt e) aber festgestellt wird, dass die Abweichung zwischen dem durch das Bremssignal repräsentierten Soll-Bremsdruck und dem von dem Drucksensor erfassten Ist-Bremsdruck vorliegt, welche kleiner als die vorgegebene erlaubte Abweichung ist, so ist das ein Hinweis dafür dass die erste Bremsleitung in dem Abschnitt hinter dem ersten ABS-Drucksteuerventil keine Leckage aufweist. Optional kann dann ein Signal erzeugt werden, welches eine erste Bremsleitung repräsentiert, welche keine Leckage in dem dem ersten ABS-Drucksteuerventil nachgeordneten Abschnitt aufweist, gesehen vom Druckregelmodul aus.
   Dann wird die zweite Bremsleitung im Hinblick auf ein Vorliegen einer Leckage in dem dem zweiten ABS-Drucksteuerventil nachgeordneten Abschnitt überprüft, indem
g) das zweite ABS-Drucksteuerventil in den Zustand "Druckaufbau" gesteuert und das erste ABS-Drucksteuerventil in dem Zustand "Druckhalten" gehalten oder in den Zustand "Druckhalten" gesteuert wird, und
h) falls dann festgestellt wird, dass die Abweichung zwischen dem durch das Bremssignal repräsentierten Soll-Bremsdruck und dem von dem Drucksensor erfassten Ist-Bremsdruck kleiner als die vorgegebene erlaubte Abweichung ist, so ist dies ein Hinweis dafür, dass die zweite Bremsleitung keine Leckage aufweist. Optional wird dann ein Signal erzeugt, welches eine zweite pneumatische Bremsleitung repräsentiert, welche keine Leckage aufweist.
   Falls dann aber festgestellt wird, dass die Abweichung zwischen dem durch das Bremssignal repräsentierten Soll-Bremsdruck und dem von dem Drucksensor erfassten Ist-Bremsdruck größer oder gleich in Bezug auf die vorgegebene erlaubte Abweichung ist, so ist dies ein Hinweis dafür, dass in der zweiten Bremsleitung in dem vom Druckregelmodul aus gesehen dem zweiten ABS-Drucksteuerventil nachgeordneten Abschnitt eine Leckage vorhanden ist. Dann wird das zweite ABS-Drucksteuerventil in den Zustand "Druckhalten" gesteuert, um zu verhindern, dass Druckluft aus dem Druckluftvorrat über die Leckage in die Atmosphäre strömt.

Falls der Kanal des Druckregelmoduls mehr als zwei Ausgänge aufweist und dann auch mehr als zwei Bremsleitungen mit jeweils einem ABS-Drucksteuerventil und jeweils einem Bremszylinder vorhanden sind, können die Schritte g) und h) dann für die dritte und alle weiteren Bremsleitungen wiederholt werden bis alle Bremsleitungen mit Hilfe des Verfahrens geprüft sind.

Mit anderen Worten werden durch die Erfindung eine Leckage in einer Bremsleitung einer elektro-pneumatischen Bremsvorrichtung erkannt und lokalisiert und wenn möglich durch Steuern oder Halten des in der betreffenden Bremsleitung angeordneten ABS-Drucksteuerventils in den oder in dem Zustand "Druckhalten" die Folgen einer solchen Leckage gemindert, indem dadurch ein weiterer Druckluftverlust verhindert wird.

Die Detektion einer Leckage erfolgt daher dadurch, dass zunächst alle ABS-Drucksteuerventile in Bremsleitungen, die von einem Kanal des wenigstens einkanaligen Druckregelmoduls ausgehen in den Zustand "Druckhalten" geschaltet werden. Wenn dann eine signifikante Erhöhung des ausgesteuerten Bremsdrucks festgestellt werden kann, ist die Leckagestelle durch die in Sperrstellung geschalteten ABS-Drucksteuerventile von einer weiteren Druckluftzufuhr über das Druckregelmodul abgetrennt. Durch einzelnes Öffnen der ABS-Drucksteuerventile und Beobachten des Druckverlaufs kann dann die Bremsleitung detektiert werden, welche die Leckage aufweist. Fällt der Druck nach Öffnen eines ABS-Drucksteuerventils signifikant, so ist in der zugeordneten Bremsleitung die Leckage vom Druckregelmodul aus gesehen hinter dem ABS-Drucksteuerventil vorhanden. Das in dieser Bremsleitung angeordnete ABS-Drucksteuerventil wird dann zumindest für die Zeit der Wirksamkeit Bremssignals in den Zustand "Druckhalten" geschaltet, um Druckluftverlust zu vermeiden. Danach wird die andere Bremsleitung auf Leckage getestet. Wenn sich dabei herausstellt, dass die andere Bremsleitung leckagefrei ist, so wird das zugeordnete andere ABS-Drucksteuerventil weiterhin gemäß der üblichen ABS-Regelung betrieben, d.h. bei einer Aktivierung der ABS-Regelung aufgrund übermäßigen Bremsschlupfs wird an dem dem anderen ABS-Drucksteuerventil zugeordneten Rad die normale ABS-Regelung durchgeführt.

Ein besonderer Vorteil der Erfindung liegt darin, dass ein bereits vorhandenes Druckregelmodul sowie alle Bauteile und Baugruppen des betreffenden Bremskreises bezogen auf ihre Hardwarestruktur unverändert bleiben können. Lediglich die Software bzw. der Algorithmus zur Ausführung des Verfahrens muss ergänzt werden, sei es in dem elektronischen Steuergerät des Druckregelmoduls oder in einem anderen Steuergerät. Das Verfahren oder Testverfahren ist daher sehr kostengünstig realisierbar.

Durch die in den Unteransprüchen aufgeführten Maßnahmen sind vorteilhafte Weiterbildungen und Verbesserungen der Erfindung möglich.

Um trotz des Schaltens eines einer Fahrzeugseite zugeordneten ABS-Drucksteuerventils in den Zustand "Druckhalten" aufgrund einer in der betreffenden Bremsleitung detektierten Leckage noch Fahrzeugstabilität zu gewährleisten, ist es von Vorteil, wenn der an der anderen Fahrzeugseite der betreffenden Achse noch wirksame Bremsdruck begrenzt wird, um die Bremsdruckdifferenz zwischen den Fahrzeugseiten und damit das Giermoment beim Bremsen zu begrenzen.

Besonders bevorzugt wird wenigstens eines der oben beschriebenen Signale in einem auslesbaren Speicher gespeichert und/oder auf einem Display dargestellt. Damit kann der Fahrer des Fahrzeugs Notiz von einer etwaigen Leckage in einer der Bremsleitungen nehmen bzw. Wartungspersonal das Signal auslesen und die Leckage beheben.

Besonders bevorzugt ist der Algorithmus in dem elektronischen Steuergerät implementiert, welches in dem Druckregelmodul Bremsfunktionen und/oder die ABS-Regelung regelt oder steuert und in dem Druckregelmodul integriert ist. Alternativ kann der Algorithmus in einem beliebigen, auch separaten elektronischen Steuergerät gespeichert sein.

Besonders bevorzugt ist Bremsvorrichtung ein elektronisch geregeltes Bremssystem mit Bremsdruckregelung (EBS), wobei die Bremsdruckregelung in jedem Kanal des oder der Druckregelmodule stattfindet.

Die Erfindung betrifft nicht zuletzt auch ein Fahrzeug mit einer oben beschriebenen Bremsvorrichtung.

Weitere die Erfindung verbessernde Maßnahmen werden nachstehend gemeinsam mit der Beschreibung eines Ausführungsbeispiels der Erfindung anhand der Zeichnung näher dargestellt.

In der ein Ausführungsbeispiel der Erfindung darstellenden Zeichnung zeigt
- Fig.1: einen Ausschnitt aus einem schematischen Schaltplan einer bevorzugten Ausführungsform einer elektro-pneumatischen Bremsvorrichtung eines Nutzfahrzeugs;
- Fig.2: einen Ablaufplan einer bevorzugten Ausführungsform des erfindungsgemäßen Verfahrens.

### Beschreibung des Ausführungsbeispiels

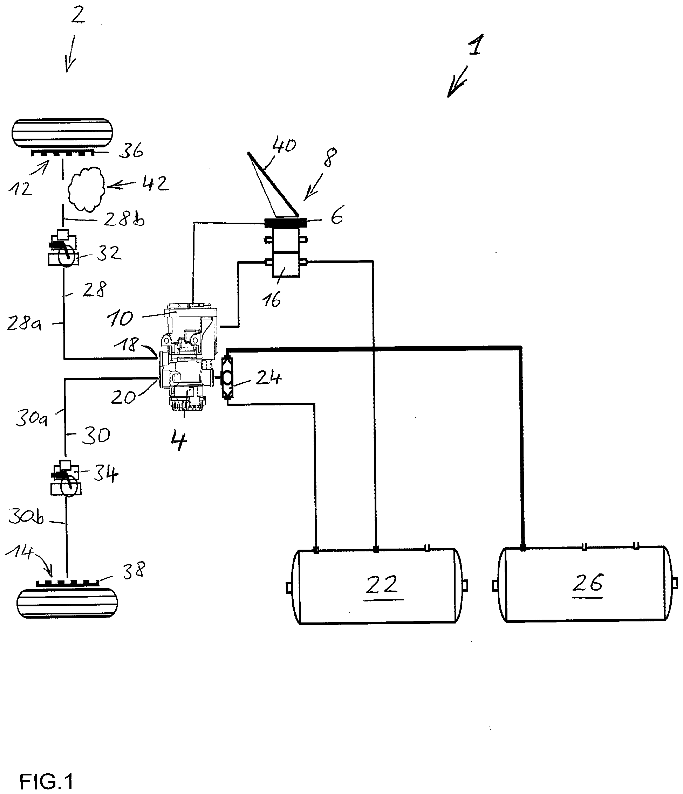

In **Fig.1** ist ein Ausschnitt aus einem schematischen Schaltplan einer bevorzugten Ausführungsform einer elektro-pneumatischen Bremsvorrichtung 1 eines Nutzfahrzeugs gezeigt. Dabei sind lediglich die eine Vorderachse 2 betreffenden Bauteile und Baugruppen dargestellt. Die elektro-pneumatische Bremsvorrichtung 1 ist insbesondere ein elektronisch geregeltes Bremssystem (EBS) mit Bremsdruckregelung an allen gebremsten Achsen bzw. Rädern. Die elektro-pneumatische Bremsvorrichtung 1 weist eine ABS-Regelung an allen gebremsten Rädern auf.

Der Vorderachse 2 ist beispielsweise ein 1-Kanal-Druckregelmodul 4 zugeordnet, welches in einem Kanal auf ein von einem elektrischen Kanal 6 eines Fußbremsmoduls 8 in ein hier nicht explizit elektronisches Steuergerät 10 des Druckregelmoduls 4 eingesteuertes Bremssignal hin einen Bremsdruck für einen ersten, z.B. rechten Bremszylinder 12 und einen zweiten, z.B. linken Bremszylinder 14 erzeugt. Die beidne Bremszylinder 12, 14 sind hier nicht explizit gezeigt.

In das Druckregelmodul 4 ist in bekannter Weise das elektronische Steuergerät 10, eine von diesem gesteuerte Einlass-/Auslass-Magnetventilkombination, ein an einen pneumatischen Vorderachskanal 16 des Fußbremsmodul 8 angeschlossenes und ebenfalls vom elektronischen Steuergerät 10 gesteuertes Backup-Magnetventil sowie ein Relaisventil integriert, welches von der Einlass-/Auslass-Magnetventilkombination pneumatisch gesteuert wird. Ein Arbeitsausgang dieses Relaisventils ist mit einem ersten oder rechten Ausgang 18 des Druckregelmoduls 4 und mit einem zweiten oder linken Ausgang 20 des Druckregelmoduls 4 verbunden. Weiterhin ist auch ein Drucksensor in das Druckregelmodul 4 integriert, welches den Ist-Bremsdruck an den beiden Ausgängen 18, 20 misst und in das elektronische Steuergerät 10 rücksteuert.

Das Druckregelmodul 4 wie auch der pneumatische Vorderachskanal 16 des Fußbremsmoduls 8 werden von einem Druckluftvorrat 22 für die Vorderachse mit Druckluft unter Vorratsdruck versorgt, aus welchem dann das Druckregelmodul 4 den Bremsdruck moduliert. Weiterhin ist auch ein Wechselventil 24 vorgesehen, welches als "select high" den größeren der Vorratsdrücke des Druckluftvorrats 22 für die Vorderachse und eines Druckluftvorrats 26 für Nebenverbraucher an das Druckregelmodul 4 weiter steuert.

Eine erste oder hier rechte pneumatische Bremsleitung 28 ist zwischen dem ersten oder hier rechten Ausgang 18 des Kanals des Druckregelmoduls 4 und dem ersten oder hier rechten pneumatischen Bremszylinder 12 und eine zweite oder hier linke pneumatische Bremsleitung 30 zwischen dem zweiten oder hier linken Ausgang 20 des Kanals des Druckregelmoduls 4 und dem zweiten oder hier linken pneumatischen Bremszylinder 14 gezogen. Weiterhin sind ein erstes oder hier rechtes ABS-Drucksteuerventil 32 und ein zweites oder hier linkes ABS-Drucksteuerventil 34 vorhanden, wobei das erste ABS-Drucksteuerventil 32 in der ersten pneumatischen Bremsleitung 28 und das zweite ABS-Drucksteuerventil 34 in der zweiten pneumatischen Bremsleitung 30 angeordnet ist. Die erste Bremsleitung 28 und die zweite Bremsleitung 30 weisen im Hinblick auf das jeweilige ABS-Drucksteuerventil 32, 34 daher vom Druckregelmodul 4 aus gesehen einen dem jeweiligen ABS-Drucksteuerventil 32, 34 vorgeordneten Abschnitt 28a, 30a und einen dem ABS-Drucksteuerventil nachgeordneten Abschnitt 28b, 30b auf.

Die ABS-Drucksteuerventile 32, 34 sind von einem elektronischen, hier nicht gezeigten Bremssteuergerät im Rahmen der ABS-Regelung unabhängig voneinander in die Zustände "Druckhalten", "Druckabbauen" und "Druckaufbauen" steuerbar. Im Zustand "Druckhalten" befindet sich das betreffende ABS-Drucksteuerventil 32, 34 in Sperrstellung und sperrt daher eine Weiterleitung des vom Druckregelmodul 4 ausgesteuerten Bremsdrucks in den zugeordneten Bremszylinder 12, 14. Der Zustand "Druckaufbauen" bedeutet, dass das ABS-Drucksteuerventil 32, 34 in seine Durchlassstellung geschaltet wird, in welcher der vom Druckregelmodul 4 eingesteuerte Bremsdruck ungehindert in den zugeordneten Bremszylinder 12, 14 eingesteuert wird.

Der Zustand "Druckabbauen" bedeutet, dass das ABS-Drucksteuerventil 32, 34 in seine Entlüftungsstellung geschaltet wird, in welcher der im zugeordneten Bremszylinder 12, 14 herrschende Bremsdruck über das ABS-Drucksteuerventil 32, 34 entlüftet wird. Der Aufbau und die Funktion eines solchen ABS-Drucksteuerventils 32, 34 sind hinreichend bekannt. Deshalb soll hier nicht weiter darauf eingegangen werden. Zur Bestimmung des radindividuellen Ist-Bremsschlupfes sind an einem ersten oder hier rechten Vorderrad ein erster oder hier rechter Raddrehzahlsensor 36 und an einem zweiten oder hier linken Vorderrad ein zweiter oder hier linker Raddrehzahlsensor 38 angeordnet, welche die jeweilige Raddrehzahl dem Bremssteuergerät zum Durchführen der ABS-Regelung melden.

Darüber hinaus sind hier zumindest die ABS-Drucksteuerventile 32, 34 der Vorderachse von einem beispielsweise in dem elektronischen Steuergerät 10 des Druckregelmoduls 4 implementierten und weiter unten noch genauer beschriebenen Algorithmus individuell und unabhängig in die oben beschriebenen Zustände "Druckhalten", "Druckabbauen" und "Druckaufbauen" steuerbar.

Auf ein einen Soll-Bremsdruck repräsentierendes Bremssignal hin, welches insbesondere von dem elektrischen Kanal 6 des Fußbremsmoduls 8 auf eine Betätigung einer Fußbremsplatte 40 durch den Fahrer hin erzeugt und in das elektronische Steuergerät 10 des Druckregelmoduls 4 eingesteuert wird, steuert dieses die elektromagnetische Einlass-/Auslassventilkombination im Druckregelmodul 4 an, um einen Ist-Bremsdruck in die pneumatischen Bremsleitungen 28, 30 einzusteuern. Der in dem Druckregelmodul 4 integrierte Drucksensor erfasst den vom Druckregelmodul 4 in die erste und zweite pneumatische Bremsleitung 28, 30 eingesteuerten Ist-Bremsdruck und steuert ein den Ist-Bremsdruck repräsentierendes Drucksignal in das elektronische Steuergerät 10 des Druckregelmoduls 4 ein, wobei der Drucksensor vom Druckregelmodul 4 aus gesehen dem ersten ABS-Drucksteuerventil 32 und dem zweiten ABS-Drucksteuerventil 34 vorgeordnet ist. Eine in dem elektronischen Steuergerät 10 des Druckregelmoduls 4 implementierte Bremsdruckregelung sorgt dann für einen Abgleich zwischen dem Ist-Bremsdruck und Soll-Bremsdruck, indem sie die elektromagnetische Einlass-/Auslassventilkombination entsprechend ansteuert.

Vorzugsweise in dem elektronischen Steuergerät 10 des Druckregelmoduls 4 ist ein Algorithmus zur Detektion und Minderung der negativen Folgen einer Leckage in wenigstens einer der pneumatischen Bremsleitungen 28, 30 implementiert. Alternativ könnte der Algorithmus auch in einem von dem elektronischen Steuergerät 10 des Druckregelmoduls 4 abweichenden weiteren Steuergerät implementiert sein. Dieser Algorithmus bzw. das elektronische Steuergerät 10 ist ausgebildet, dass er/es ein Verfahren zur Detektion und Minderung der negativen Folgen einer Leckage in wenigstens einer der pneumatischen Bremsleitungen 28, 30 steuert.

Beispielhaft ist in **Fig.1** eine Situation gezeigt, bei welcher in dem dem ersten oder hier rechten ABS-Drucksteuerventil 18 nachgeordneten Abschnitt 28b der ersten oder hier rechten Bremsleitung 28 eine Leckage 42 vorliegt, aufgrund welcher bei einer Bremsung Druckluft entweicht.

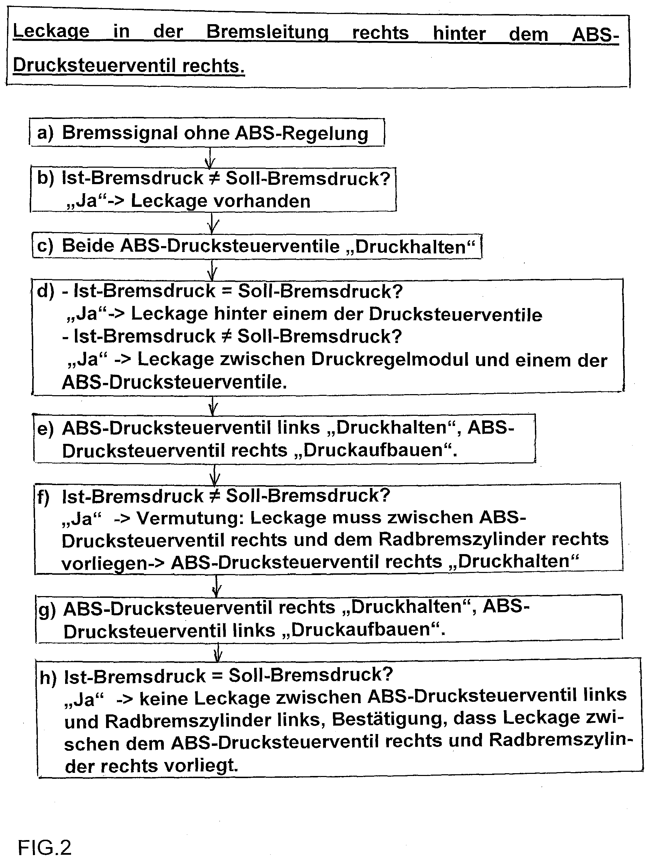

Zur Detektion der Leckage und zur Minderung von deren Folgen sieht das Verfahren gemäß einer bevorzugten Ausführungsform wenigstens die folgenden, in **Fig.2** in verkürzter Form dargestellten Schritte vor:
a) Im Stillstand oder während der Fahrt wird ein Bremssignal in das Druckregelmodul 4 eingesteuert. Dieses Bremssignal stammt hier beispielsweise von dem elektrischen Kanal 6 des Fußbremsmoduls 8 aufgrund einer Betätigung der Fußbremsplatte 40 durch den Fahrer. Das Bremssignal kann im Stillstand bei sich drehenden Rädern (Rollenprüfstand) oder still stehenden Rädern z.B. im Rahmen eines Testlaufs oder während der Fahrt erzeugt werden.
b) Bei inaktiver ABS-Regelung wird eine Abweichung zwischen dem durch das Bremssignal repräsentierten Soll-Bremsdruck und dem von dem Drucksensor des Druckregelmoduls 4 erfassten Ist-Bremsdruck ermittelt.
   Falls dabei festgestellt wird, dass die ermittelte Abweichung kleiner als die vorgegebene erlaubte Abweichung (In Fig.2 vereinfacht: Ist-Bremsdruck = Soll-Bremsdruck, "Ja") ist, so wird beispielsweise das Verfahren beendet und/oder ein Signal erzeugt, welches eine erste pneumatische Bremsleitung 28 und eine zweite pneumatische Bremsleitung 30 repräsentiert, welche jeweils frei von Leckagen sind. Dieses Signal deutet daher auf leckagefreie Bremsleitungen 28, 30 hin, so dass kein Handlungsbedarf besteht.
   Falls aber dabei festgestellt wird, dass die ermittelte Abweichung größer oder gleich in Bezug auf die vorgegebene erlaubte Abweichung ist (In Fig.2 vereinfacht: Ist-Bremsdruck ≠ Soll-Bremsdruck, "Ja"), so deutet dies auf einen Druckluftverlust und damit auf eine Leckage in einer der Bremsleitungen 28 oder 30 hin. Dann werden
c) das erste ABS-Drucksteuerventil 32 und das zweite erste ABS-Drucksteuerventil 34 jeweils in den Zustand "Druckhalten" geschaltet. Optional wird dann erneut das Bremssignal in das Druckregelmodul 4 eingesteuert, weil das beim ersten Bremssignal erzeugte Druckluftvolumen für den gesamten Verfahrensablauf unter Umständen nicht ausreichend ist. Dann
d) wird die Abweichung zwischen dem durch das Bremssignal repräsentierten Soll-Bremsdruck und dem von dem Drucksensor des Druckregelmoduls 4 erfassten Ist-Bremsdruck ermittelt.
   Falls dabei festgestellt wird, dass die Abweichung größer oder gleich in Bezug auf die vorgegebene erlaubte Abweichung ist (In Fig.2 vereinfacht: Ist-Bremsdruck * Soll-Bremsdruck, "Ja"), so deutet dies darauf hin, dass eine Leckage in einem vom Druckregelmodul 4 aus gesehen dem zugeordneten ABS-Drucksteuerventil 32, 34 vorgeordneten Abschnitt 28a, 30a einer Bremsleitung 28, 30 besteht. In diesem Fall wird beispielsweise das Verfahren beendet und/oder optional ein Signal erzeugt, welches eine erste pneumatische Bremsleitung 28 und eine zweite pneumatische Bremsleitung 30 repräsentiert, von welchen wenigstens eine pneumatische Bremsleitung 28, 30 von dem Druckregelmodul 4 aus gesehen in dem dem zugeordneten ABS-Drucksteuerventil 32, 34 vorgeordneten Abschnitt 28a, 30a eine Leckage aufweist. Die Folgen einer solchen Leckage können aber nicht durch ein Schalten des betreffenden ABS-Drucksteuerventils 32, 34 gemindert werden, so dass hier das Signal lediglich eine Detektion der Leckage ermöglicht.
   Falls aber dabei festgestellt wird, dass die ermittelte Abweichung kleiner als die vorgegebene erlaubte Abweichung ist (In Fig.2 vereinfacht: Ist-Bremsdruck = Soll-Bremsdruck, "Ja"), so deutet dies auf eine Leckage in dem Abschnitt 28b, 30b einer Bremsleitung 28, 30 hin, welche vom Druckregelmodul 4 aus gesehen dem betreffenden ABS-Drucksteuerventil 32, 34 nachgeordnet ist. Dann wird
e) das erste oder hier rechte ABS-Drucksteuerventil 32 in den Zustand "Druckaufbau" gesteuert und das zweite oder hier linke ABS-Drucksteuerventil 34 in dem Zustand "Druckhalten" gehalten oder in diesen gesteuert, und
f) falls dann festgestellt wird, dass die Abweichung zwischen dem durch das Bremssignal repräsentierten Soll-Bremsdruck und dem von dem Drucksensor des Druckregelmoduls 4 erfassten Ist-Bremsdruck größer oder gleich in Bezug auf die vorgegebene erlaubte Abweichung ist (In Fig.2 vereinfacht: Ist-Bremsdruck ≠ Soll-Bremsdruck, "Ja"), dann deutet dies auf eine Leckage in dem dem ersten ABS-Drucksteuerventil 32 nachgeordneten Abschnitt 28b der ersten Bremsleitung 28 hin, weil dann der Ist-Bremsdruck signifikant kleiner als der Soll-Bremsdruck ist. Optional wird dann ein Signal erzeugt, welches eine erste oder hier rechte Bremsleitung 28 repräsentiert, welche eine Leckage in dem dem ersten oder hier rechten ABS-Drucksteuerventil 32 nachgeordneten Abschnitt 28b aufweist, gesehen vom Druckregelmodul 4 aus.
   Dann wird das erste ABS-Drucksteuerventil 32 vom Zustand "Druckaufbau" in den Zustand "Druckhalten" und damit in den Sperrzustand gesteuert, so dass eine Nachfuhr von Druckluft in den dem ersten ABS-Drucksteuerventil 32 nachgeordneten Abschnitt 28b der ersten Bremsleitung 28 unterbunden und folglich verhindert wird, dass der Druckluftvorrat 22 über die Leckage beim Bremsen entleert wird.
   Falls nach dem obigen Schritt e) aber festgestellt wird, dass die Abweichung zwischen dem durch das Bremssignal repräsentierten Soll-Bremsdruck und dem von dem Drucksensor erfassten Ist-Bremsdruck vorliegt, welche kleiner als die vorgegebene erlaubte Abweichung ist, so ist das ein Hinweis dafür dass die erste Bremsleitung 28 in dem Abschnitt 28b hinter dem ersten ABS-Drucksteuerventil 32 keine Leckage aufweist, was hier aber beispielsweise nicht zutreffend ist. Optional könnte in einem solchen Fall dann ein Signal erzeugt werden, welches eine erste oder hier rechte Bremsleitung 28 repräsentiert, welche keine Leckage in dem dem ersten oder hier rechten ABS-Drucksteuerventil 32 nachgeordneten Abschnitt 28b aufweist, gesehen vom Druckregelmodul 4 aus.
   Dann wird die zweite oder hier linke Bremsleitung 30 im Hinblick auf ein Vorliegen einer Leckage in dem dem zweiten oder hier linken ABS-Drucksteuerventil 34 nachgeordneten Abschnitt 30b überprüft, indem
g) das zweite oder hier linke ABS-Drucksteuerventil 34 in den Zustand "Druckaufbau" gesteuert und das erste oder hier rechte ABS-Drucksteuerventil 32 in dem Zustand "Druckhalten" gehalten oder in den Zustand "Druckhalten" gesteuert wird, und
h) falls dann festgestellt wird, dass die Abweichung zwischen dem durch das Bremssignal repräsentierten Soll-Bremsdruck und dem von dem Drucksensor des Druckregelmoduls 4 erfassten Ist-Bremsdruck kleiner als die vorgegebene erlaubte Abweichung ist (In Fig.2 vereinfacht: Ist-Bremsdruck = Soll-Bremsdruck, "Ja"), so ist dies ein Hinweis dafür, dass die zweite oder hier linke Bremsleitung 30 keine Leckage aufweist. Optional wird dann ein Signal erzeugt, welches eine zweite oder hier linke pneumatische Bremsleitung 30 repräsentiert, welche keine Leckage aufweist.
   Falls dann aber festgestellt wird, dass die Abweichung zwischen dem durch das Bremssignal repräsentierten Soll-Bremsdruck und dem von dem Drucksensor des Druckregelmoduls 4 erfassten Ist-Bremsdruck größer oder gleich in Bezug auf die vorgegebene erlaubte Abweichung ist, was hier aber beispielsweise nicht zutrifft, so wäre dies ein Hinweis dafür, dass in der zweiten oder hier linken Bremsleitung 30 in dem vom Druckregelmodul 4 aus gesehen dem zweiten oder hier linken ABS-Drucksteuerventil 34 nachgeordneten Abschnitt 30b eine Leckage vorhanden ist. In diesem Fall, der hier beispielsweise nicht zutrifft, würde das zweite ABS-Drucksteuerventil 34 in den Zustand "Druckhalten" gesteuert werden, um zu verhindern, dass Druckluft aus dem Druckluftvorrat 22 über die Leckage in die Atmosphäre strömt.

Mit Hilfe des beschriebenen Verfahrens ist es daher zum einen möglich, die Leckage 42 in dem dem ersten oder hier rechten ABS-Drucksteuerventil 32 nachgeordneten Abschnitt 28b der ersten oder hier rechten Bremsleitung 28 zu lokalisieren. Zum andern werden die Folgen dieser Leckage 42 dann dadurch gemindert, dass das erste oder hier rechte ABS-Drucksteuerventil 32 in den Zustand "Druckhalten" geschaltet wird.

Es versteht sich dabei, das mit dem Verfahren bzw. mit der durch die Erfindung erweiterten Bremsvorrichtung 1 nicht nur eine Leckage 42 in der ersten oder rechten Bremsleitung 28 detektiert und deren Folgen gemindert werden können, sondern auch in der zweiten oder linken Bremsleitung 30 bzw. in beiden Bremsleitungen 28, 30. Auch kann mit dem Verfahren bzw. mit der durch die Erfindung erweiterten Bremsvorrichtung 1 eine Leckage in jeglicher Bremsleitung detektiert und deren Folgen gemindert werden, welche ein ABS-Drucksteuerventil beinhaltet, insbesondere auch an der Hinterachse. Weiterhin kann mit einem einzigen 1-Kanal-Druckregelmodul auch ein Vorderachsbremskreis und ein Hinterachsbremskreis mit jeweils zwei Bremsleitungen gesteuert werden. Auch für diesen Fall ist die Erfindung anwendbar, wobei dann alle vier Bremsleitungen mit dem erfindungsgemäßen Verfahren überprüft werden.

### Bezugszeichenliste

- 1: Bremsvorrichtung
- 2: Vorderachse
- 4: Druckregelmodul
- 6: elektrischer Kanal
- 8: Fußbremsmodul
- 10: Steuergerät
- 12: erster Bremszylinder
- 14: zweiter Bremszylinder
- 16: Vorderachskanal
- 18: erster Ausgang
- 20: zweiter Ausgang
- 22: Druckluftvorrat Vorderachse
- 24: Wechselventil
- 26: Druckluftvorrat Nebenverbraucher
- 28: erste Bremsleitung
- 28a: vorgeordneter Abschnitt
- 28b: nachgeordneter Abschnitt
- 30: zweite Bremsleitung
- 30a: vorgeordneter Abschnitt
- 30b: nachgeordneter Abschnitt
- 32: erstes ABS-Drucksteuerventil
- 34: zweites ABS-Drucksteuerventil
- 36: erster Raddrehzahlsensor
- 38: zweiter Raddrehzahlsensor
- 40: Fußbremsplatte
- 42: Leckage

## Patentansprüche

1. Verfahren zur Detektion und Minderung der negativen Folgen einer Leckage in einer pneumatischen Bremsleitung (28, 30) einer elektro-pneumatischen, eine ABS-Regelung aufweisenden Bremsvorrichtung (1), welche wenigstens folgendes aufweist:
- wenigstens ein elektronisches Steuergerät (10),
- wenigstens ein Druckregelmodul (4) mit wenigstens einem Kanal, welcher wenigstens zwei Ausgänge aufweist, einen ersten Ausgang (18) und einen zweiten Ausgang (20),
- wenigstens zwei Bremszylinder, einen ersten Bremszylinder (12) und einen zweiten Bremszylinder (14),
- wenigstens zwei Bremsleitungen, eine erste pneumatische Bremsleitung (28) und eine zweite pneumatische Bremsleitung (30), wobei die erste pneumatische Bremsleitung (28) zwischen dem ersten Ausgang (18) des Kanals des Druckregelmoduls (4) und dem ersten pneumatischen Bremszylinder (12) und die zweite pneumatische Bremsleitung (30) zwischen dem zweiten Ausgang (20) des Kanals des Druckregelmoduls (4) und dem zweiten pneumatischen Bremszylinder (14) gezogen ist,
- wenigstens zwei ABS-Drucksteuerventile, ein erstes ABS-Drucksteuerventil (32) und ein zweites ABS-Drucksteuerventil (34), wobei das erste ABS-Drucksteuerventil (32) in der ersten pneumatischen Bremsleitung (28) und das zweite ABS-Drucksteuerventil (34) in der zweiten pneumatischen Bremsleitung (30) angeordnet ist und wobei die ABS-Drucksteuerventile (32, 34) von dem elektronischen Steuergerät (10) unabhängig in die Zustände "Druckhalten", "Druckabbauen" und "Druckaufbauen" steuerbar sind,
- wenigstens ein Drucksensor, welcher einen vom Druckregelmodul (4) in die erste und zweite pneumatische Bremsleitung (28, 30) eingesteuerten Ist-Bremsdruck erfasst und ein den Ist-Bremsdruck repräsentierendes Drucksignal in das elektronische Steuergerät (10) einsteuert, wobei der Drucksensor vom Druckregelmodul (4) aus gesehen dem ersten und dem zweiten ABS-Drucksteuerventil (32, 34) vorgeordnet ist, und wobei
- das Druckregelmodul (4) auf ein einen Soll-Bremsdruck repräsentierendes Bremssignal hin den Ist-Bremsdruck in die pneumatischen Bremsleitungen (28, 30) einsteuert,
**gekennzeichnet durch** wenigstens die folgenden Schritte:
a) Im Stillstand oder während der Fahrt wird ein Bremssignal in das Druckregelmodul (4) eingesteuert, und bei inaktiver ABS-Regelung
b) wird eine Abweichung zwischen dem durch das Bremssignal repräsentierten Soll-Bremsdruck und dem von dem Drucksensor erfassten Ist-Bremsdruck ermittelt, und falls dabei festgestellt wird, dass die ermittelte Abweichung größer oder gleich in Bezug auf eine vorgegebene erlaubte Abweichung ist, dann
c) wird das erste ABS-Drucksteuerventil (32) und das zweite ABS-Drucksteuerventil (34) in den Zustand "Druckhalten" geschaltet, und dann
d) wird die Abweichung zwischen dem durch das Bremssignal repräsentierten Soll-Bremsdruck und dem von dem Drucksensor erfassten Ist-Bremsdruck ermittelt, und falls dabei festgestellt wird, dass die ermittelte Abweichung kleiner als die vorgegebene erlaubte Abweichung ist, dann
e) wird das erste ABS-Drucksteuerventil (32) in den Zustand "Druckaufbau" gesteuert und das zweite ABS-Drucksteuerventil (34) in dem Zustand "Druckhalten" gehalten oder in den Zustand "Druckhalten" gesteuert, und
f) falls dann festgestellt wird, dass eine Abweichung zwischen dem durch das Bremssignal repräsentierten Soll-Bremsdruck und dem von dem Drucksensor erfassten Ist-Bremsdruck vorliegt, welche größer oder gleich in Bezug auf die vorgegebene erlaubte Abweichung ist, dann wird das erste ABS-Drucksteuerventil (32) in den Zustand "Druckhalten" gesteuert, und dann
g) wird das zweite ABS-Drucksteuerventil (34) in den Zustand "Druckaufbau" gesteuert und das erste ABS-Drucksteuerventil (32) in dem Zustand "Druckhalten" gehalten oder in den Zustand "Druckhalten" gesteuert, und
h) falls dann festgestellt wird, dass eine Abweichung zwischen dem durch das Bremssignal repräsentierten Soll-Bremsdruck und dem von dem Drucksensor erfassten Ist-Bremsdruck vorliegt, welche größer oder gleich in Bezug auf die vorgegebene erlaubte Abweichung ist, dann wird das zweite ABS-Drucksteuerventil (34) in den Zustand "Druckhalten" gesteuert.

2. Verfahren nach Anspruch 1, **dadurch gekennzeichnet, dass** während wenigstens einem der Schritte c) und g) von Anspruch 1 das Bremssignal erneut in das Druckregelmodul (4) eingesteuert wird.

3. Verfahren nach einem der vorhergehenden Ansprüche, **dadurch gekennzeichnet, dass** falls während Schritt b) von Anspruch 1 eine Abweichung zwischen dem durch das Bremssignal repräsentierten Soll-Bremsdruck und dem von dem Drucksensor erfassten Ist-Bremsdruck ermittelt wird, welche kleiner als die vorgegebene erlaubte Abweichung ist, so wird das Verfahren beendet und/oder ein Signal erzeugt, welches eine erste pneumatische Bremsleitung (28) und eine zweite pneumatische Bremsleitung (30) repräsentiert, welche jeweils frei von Leckagen sind.

4. Verfahren nach einem der vorhergehenden Ansprüche, **dadurch gekennzeichnet, dass** falls während Schritt d) von Anspruch 1 eine Abweichung zwischen dem durch das Bremssignal repräsentierten Soll-Bremsdruck und dem von dem Drucksensor erfassten Ist-Bremsdruck ermittelt wird, welche größer oder gleich in Bezug auf die vorgegebene erlaubte Abweichung ist, so wird das Verfahren beendet und/oder ein Signal erzeugt, welches eine erste pneumatische Bremsleitung (28) und eine zweite pneumatische Bremsleitung (30) repräsentiert, von welchen wenigstens eine pneumatische Bremsleitung (28, 30) von dem Druckregelmodul (4) aus gesehen in einem dem zugeordneten ABS-Drucksteuerventil (32, 34) vorgeordneten Abschnitt (28a, 30a) eine Leckage aufweist.

5. Verfahren nach einem der vorhergehenden Ansprüche, **dadurch gekennzeichnet, dass** falls während Schritt f) von Anspruch 1 eine Abweichung zwischen dem durch das Bremssignal repräsentierten Soll-Bremsdruck und dem von dem Drucksensör erfassten Ist-Bremsdruck ermittelt wird, welche kleiner als die vorgegebene erlaubte Abweichung ist, so wird ein Signal erzeugt, welches eine erste pneumatische Bremsleitung (28) repräsentiert, welche keine Leckage aufweist.

6. Verfahren nach einem der vorhergehenden Ansprüche, **dadurch gekennzeichnet, dass** falls während Schritt f) von Anspruch 1 eine Abweichung zwischen dem durch das Bremssignal repräsentierten Soll-Bremsdruck und dem von dem Drucksensor erfassten Ist-Bremsdruck ermittelt wird, welche größer oder gleich in Bezug auf die vorgegebene erlaubte Abweichung ist, so wird ein Signal erzeugt, welches eine erste Bremsleitung (28) repräsentiert, welche eine Leckage (42) in einem dem ersten ABS-Drucksteuerventil (32) nachgeordneten Abschnitt (28b) aufweist, gesehen vom Druckregelmodul (4) aus.

7. Verfahren nach einem der vorhergehenden Ansprüche, **dadurch gekennzeichnet, dass** falls während Schritt h) von Anspruch 1 eine Abweichung zwischen dem durch das Bremssignal repräsentierten Soll-Bremsdruck und dem von dem Drucksensor erfassten Ist-Bremsdruck ermittelt wird, welche kleiner als die vorgegebene erlaubte Abweichung ist, so wird ein Signal erzeugt, welches eine zweite pneumatische Bremsleitung (30) repräsentiert, welche keine Leckage aufweist.

8. Verfahren nach einem der vorhergehenden Ansprüche, **dadurch gekennzeichnet, dass** falls während Schritt h) von Anspruch 1 eine Abweichung zwischen dem durch das Bremssignal repräsentierten Soll-Bremsdruck und dem von dem Drucksensor erfassten Ist-Bremsdruck ermittelt wird, welche größer oder gleich in Bezug auf die erlaubte Abweichung ist, so wird ein Signal erzeugt, welches eine zweite Bremsleitung (30) repräsentiert, welche in einem vom Druckregelmodul (4) aus gesehen dem zweiten ABS-Drucksteuerventil (34) nachgeordneten Abschnitt (30b) eine Leckage aufweist.

9. Verfahren nach einem der vorhergehenden Ansprüche, **dadurch gekennzeichnet, dass** das Bremssignal auf der Basis eines in einem elektrischen Kanal (6) eines Fußbremswertgebers (8) erzeugten Bremsanforderungssignals oder durch ein Fahrerassistenzsystem automatisch erzeugt wird.

10. Elektro-pneumatische, eine ABS-Regelung aufweisende Bremsvorrichtung eines Fahrzeugs, welche wenigstens folgendes aufweist:
- wenigstens ein elektronisches Steuergerät (10),
- wenigstens ein Druckregelmodul (4) mit wenigstens einem Kanal, welcher wenigstens zwei Ausgänge aufweist, einen ersten Ausgang (18) und einen zweiten Ausgang (20),
- wenigstens zwei Bremszylinder, einen ersten Bremszylinder (12) und einen zweiten Bremszylinder (14),
- wenigstens zwei Bremsleitungen, eine erste pneumatische Bremsleitung (28) und eine zweite pneumatische Bremsleitung (30), wobei die erste pneumatische Bremsleitung (28) zwischen dem ersten Ausgang (18) des Kanals des Druckregelmoduls (4) und dem ersten pneumatischen Bremszylinder (12) und die zweite pneumatische Bremsleitung (30) zwischen dem zweiten Ausgang (20) des Kanals des Druckregelmoduls (4) und dem zweiten pneumatischen Bremszylinder (14) gezogen ist,
- wenigstens zwei ABS-Drucksteuerventile, ein erstes ABS-Drucksteuerventil (32) und ein zweites ABS-Drucksteuerventil (34), wobei das erste ABS-Drucksteuerventil (32) in der ersten pneumatischen Bremsleitung (28) und das zweite ABS-Drucksteuerventil (34) in der zweiten pneumatischen Bremsleitung (30) angeordnet ist und wobei die ABS-Drucksteuerventile (32, 34) von dem elektronischen Steuergerät (10) unabhängig in die Zustände "Druckhalten", "Druckabbauen" und "Druckaufbauen" steuerbar sind,
- wenigstens ein Drucksensor, welcher einen vom Druckregelmodul (4) in die erste und zweite pneumatische Bremsleitung (28, 30) eingesteuerten Ist-Bremsdruck erfasst und ein den Ist-Bremsdruck repräsentierendes Drucksignal in das elektronische Steuergerät (10) einsteuert, wobei der Drucksensor vom Druckregelmodul (4) aus gesehen dem ersten und dem zweiten ABS-Drucksteuerventil (32, 34) vorgeordnet ist, und wobei
- das Druckregelmodul (4) auf ein einen Soll-Bremsdruck repräsentierendes Bremssignal hin den Ist-Bremsdruck in die pneumatischen Bremsleitungen (28, 30) einsteuert,
**dadurch gekennzeichnet, dass** ein in dem elektronischen Steuergerät (10) oder in einem von dem elektronischen Steuergerät (10) abweichenden weiteren Steuergerät implementierter Algorithmus zur Detektion und Minderung der negativen Folgen einer Leckage in wenigstens einer der pneumatischen Bremsleitungen (28, 30) vorgesehen ist, welcher derart ausgebildet ist, dass er wenigstens die folgenden Schritte ausführt:
a) Im Stillstand oder während der Fahrt wird ein Bremssignal in das Druckregelmodul (4) eingesteuert, und bei inaktiver ABS-Regelung
b) wird eine Abweichung zwischen dem durch das Bremssignal repräsentierten Soll-Bremsdruck und dem von dem Drucksensor erfassten Ist-Bremsdruck ermittelt, und falls dabei festgestellt wird, dass die ermittelte Abweichung größer oder gleich in Bezug auf eine vorgegebene erlaubte Abweichung ist, dann
c) wird das erste ABS-Drucksteuerventil (32) und das zweite ABS-Drucksteuerventil (34) in den Zustand "Druckhalten" geschaltet, und dann
d) wird die Abweichung zwischen dem durch das Bremssignal repräsentierten Soll-Bremsdruck und dem von dem Drucksensor erfassten Ist-Bremsdruck ermittelt, und falls dabei festgestellt wird, dass die ermittelte Abweichung kleiner als die vorgegebene erlaubte Abweichung ist, dann
e) wird das erste ABS-Drucksteuerventil (32) in den Zustand "Druckaufbau" gesteuert und das zweite ABS-Drucksteuerventil (34) in dem Zustand "Druckhalten" gehalten oder in den Zustand "Druckhalten" gesteuert, und
f) falls dann festgestellt wird, dass eine Abweichung zwischen dem durch das Bremssignal repräsentierten Soll-Bremsdruck und dem von dem Drucksensor erfassten Ist-Bremsdruck vorliegt, welche größer oder gleich in Bezug auf die vorgegebene erlaubte Abweichung ist, dann wird das erste ABS-Drucksteuerventil (32) in den Zustand "Druckhalten" gesteuert, und dann
g) wird das zweite ABS-Drucksteuerventil (34) in den Zustand "Druckaufbau" gesteuert und das erste ABS-Drucksteuerventil (32) in dem Zustand "Druckhalten" gehalten oder in den Zustand "Druckhalten" gesteuert, und
h) falls dann festgestellt wird, dass eine Abweichung zwischen dem durch das Bremssignal repräsentierten Soll-Bremsdruck und dem von dem Drucksensor erfassten Ist-Bremsdruck vorliegt, welche größer oder gleich in Bezug auf die vorgegebene erlaubte Abweichung ist, dann wird das zweite ABS-Drucksteuerventil (34) in den Zustand "Druckhalten" gesteuert.

11. Bremsvorrichtung nach Anspruch 10, **dadurch gekennzeichnet, dass** der in dem elektronischen Steuergerät (10) oder in dem von dem elektronischen Steuergerät (10) abweichenden weiteren elektronischen Steuergerät implementierte Algorithmus ausgebildet ist, dass falls während Schritt b) von Anspruch 9 eine Abweichung zwischen dem durch das Bremssignal repräsentierten Soll-Bremsdruck und dem von dem Drucksensor erfassten Ist-Bremsdruck ermittelt wird, welche kleiner als die vorgegebene erlaubte Abweichung ist, so wird das Verfahren beendet und/oder ein Signal erzeugt, welches eine erste pneumatische Bremsleitung (28) und eine zweite pneumatische Bremsleitung (30) repräsentiert, welche jeweils frei von Leckagen sind.

12. Bremsvorrichtung nach einem der Ansprüche 10 oder 11, **dadurch gekennzeichnet, dass** der in dem elektronischen Steuergerät (10) oder in dem von dem elektronischen Steuergerät (10) abweichenden weiteren elektronischen Steuergerät implementierte Algorithmus ausgebildet ist, dass falls während Schritt d) von Anspruch 10 eine Abweichung zwischen dem durch das Bremssignal repräsentierten Soll-Bremsdruck und dem von dem Drucksensor erfassten Ist-Bremsdruck ermittelt wird, welche größer oder gleich in Bezug auf die vorgegebene erlaubte Abweichung ist, so wird das Verfahren beendet und/oder ein Signal erzeugt, welches eine erste pneumatische Bremsleitung (28) und eine zweite pneumatische Bremsleitung (30) repräsentiert, von welchen wenigstens eine pneumatische Bremsleitung (28, 30) von dem Druckregelmodul (4) aus gesehen in einem dem zugeordneten ABS-Drucksteuerventil (32, 34) vorgeordneten Abschnitt (28a, 30a) eine Leckage aufweist.

13. Bremsvorrichtung nach einem der Ansprüche 10 bis 12, **dadurch gekennzeichnet, dass** der in dem elektronischen Steuergerät (10) oder in dem von dem elektronischen Steuergerät (10) abweichenden weiteren elektronischen Steuergerät implementierten Algorithmus ausgebildet ist, dass falls während Schritt f) von Anspruch 10 eine Abweichung zwischen dem durch das Bremssignal repräsentierten Soll-Bremsdruck und dem von dem Drucksensor erfassten Ist-Bremsdruck ermittelt wird, welche kleiner als die vorgegebene erlaubte Abweichung ist, so wird ein Signal erzeugt, welches eine erste pneumatische Bremsleitung (28) repräsentiert, welche keine Leckage aufweist.

14. Bremsvorrichtung nach einem der Ansprüche 10 bis 13, **dadurch gekennzeichnet, dass** der in dem elektronischen Steuergerät (10) oder in dem von dem elektronischen Steuergerät (10) abweichenden weiteren elektronischen Steuergerät implementierten Algorithmus ausgebildet ist, dass falls während Schritt f) von Anspruch 10 eine Abweichung zwischen dem durch das Bremssignal repräsentierten Soll-Bremsdruck und dem von dem Drucksensor erfassten Ist-Bremsdruck ermittelt wird, welche größer oder gleich in Bezug auf die vorgegebene erlaubte Abweichung ist, so wird ein Signal erzeugt, welches eine erste Bremsleitung (28) repräsentiert, welche eine Leckage (42) in einem dem ersten ABS-Drucksteuerventil (32) nachgeordneten Abschnitt (28b) aufweist, gesehen vom Druckregelmodul (4) aus.

15. Bremsvorrichtung nach einem der Ansprüche 10 bis 14, **dadurch gekennzeichnet, dass** der in dem elektronischen Steuergerät (10) oder in dem von dem elektronischen Steuergerät (10) abweichenden weiteren elektronischen Steuergerät implementierte Algorithmus ausgebildet ist, dass falls während Schritt h) von Anspruch 10 eine Abweichung zwischen dem durch das Bremssignal repräsentierten Soll-Bremsdruck und dem von dem Drucksensor erfassten Ist-Bremsdruck ermittelt wird, welche kleiner als die vorgegebene erlaubte Abweichung ist, so wird ein Signal erzeugt, welches eine zweite pneumatische Bremsleitung (30) repräsentiert, welche keine Leckage aufweist.

16. Bremsvorrichtung nach einem der Ansprüche 10 bis 15, **dadurch gekennzeichnet, dass** der in dem elektronischen Steuergerät (10) oder in dem von dem elektronischen Steuergerät (10) abweichenden weiteren elektronischen Steuergerät implementierte Algorithmus ausgebildet ist, dass falls während Schritt h) von Anspruch 10 eine Abweichung zwischen dem durch das Bremssignal repräsentierten Soll-Bremsdruck und dem von dem Drucksensor erfassten Ist-Bremsdruck ermittelt wird, welche größer oder gleich in Bezug auf die erlaubte Abweichung ist, so wird ein Signal erzeugt, welches eine zweite Bremsleitung (30) repräsentiert, welche in einem vom Druckregelmodul (4) aus gesehen dem zweiten ABS-Drucksteuerventil (34) nachgeordneten Abschnitt (30b) eine Leckage aufweist.

17. Bremsvorrichtung nach einem der Ansprüche 10 bis 16, **dadurch gekennzeichnet, dass** das Signal in einem auslesbaren Speicher gespeichert und/oder auf einem Display dargestellt wird.

18. Bremsvorrichtung nach einem der Ansprüche 10 bis 17, **dadurch gekennzeichnet, dass** der Algorithmus in dem elektronischen Steuergerät (10) implementiert ist, welches in dem Druckregelmodul (4) Bremsfunktionen und/oder die ABS-Regelung regelt oder steuert und in dem Druckregelmodul (4) integriert ist. ,

19. Bremsvorrichtung nach einem der Ansprüche 10 bis 18, **dadurch gekennzeichnet, dass** es ein elektronisch geregeltes Bremssystem mit Bremsdruckregelung (EBS) ist.

20. Fahrzeug mit einer Bremsvorrichtung nach einem der Ansprüche 10 bis 19.

## Claims

1. A method for detecting and reducing the negative consequences of a leak in a pneumatic brake line (28, 30) of an electropneumatic brake device (1) having an ABS control system and comprising at least the following:
- at least one electronic controller (10),
- at least one pressure-control module (4) with at least one channel that has at least two outlets, namely a first outlet (18) and a second outlet (20),
- at least two brake cylinders, namely a first brake cylinder (12) and a second brake cylinder (14),
- at least two brake lines, namely a first pneumatic brake line (28) and a second pneumatic brake line (30), the first pneumatic brake line (28) running between the first outlet (18) of the channel of the pressure-control module (4) and the first pneumatic brake cylinder (12), and the second pneumatic brake line (30) running between the second outlet (20) of the channel of the pressure-control module (4) and the second pneumatic brake cylinder (14),
- at least two ABS pressure-control valves, namely a first ABS pressure-control valve (32) and a second ABS pressure-control valve (34), the first ABS pressure-control valve (32) being arranged in the first pneumatic brake line (28) and the second ABS pressure-control valve (34) being arranged in the second pneumatic brake line (30) and it being possible for the electronic controller (10) to switch the ABS pressure-control valves (32, 34) independently to the "maintain pressure", "decrease pressure" and "increase pressure" states,
- at least one pressure sensor that detects an actual brake pressure sent to the first and second pneumatic brake lines (28, 30) by the pressure-control module (4) and sends a pressure signal representing this actual brake pressure to the electronic controller (10), the pressure sensor being located upstream of the first and second ABS pressure-control valves (32, 34) when seen from the pressure-control module (4), and
- the pressure-control module (4) sending the actual brake pressure to the pneumatic brake lines (28, 30) in response to a brake signal representing a target brake pressure,
**characterised by** at least the following steps:
a) when at a standstill or driving, a brake signal is sent to the pressure-control module (4), and when the ABS control system is inactive
b) a variation between the target brake pressure represented by the brake signal and the actual brake pressure detected by the pressure sensor is determined and if it is ascertained that the variation thus determined is greater than or equal to a predetermined permitted variation,
c) the first ABS pressure-control valve (32) and the second ABS pressure-control valve (34) are then switched to the "maintain pressure" state, and
d) the variation between the target brake pressure represented by the brake signal and the actual brake pressure detected by the pressure sensor is then determined and if it is ascertained that the variation thus determined is less than the predetermined permitted variation,
e) the first ABS pressure-control valve (32) is then switched to the "increase pressure" state and the second ABS pressure-control valve (34) is held in the "maintain pressure" state or switched to the "maintain pressure" state, and
f) if it is then ascertained that there is a variation between the target brake pressure represented by the brake signal and the actual brake pressure detected by the pressure sensor that is greater than or equal to the predetermined permitted variation, the first ABS pressure-control valve (32) is switched then to the "maintain pressure" state, and
g) the second ABS pressure-control valve (34) is switched to the "increase pressure" state and the first ABS pressure-control valve (32) is held in the "maintain pressure" state or switched to the "maintain pressure" state, and
h) if it is then ascertained that there is a variation between the target brake pressure represented by the brake signal and the actual brake pressure detected by the pressure sensor that is greater than or equal to the predetermined permitted variation, then the second ABS pressure-control valve (34) is switched to the "maintain pressure" state.

2. A method according to claim 1, **characterised in that** the brake signal is sent to the pressure-control module (4) again during at least one of steps c) and g) of claim 1.

3. A method according to any one of the preceding claims, **characterised in that** if a variation less than the predetermined permitted variation between the target brake pressure represented by the brake signal and the actual brake pressure detected by the pressure sensor is determined during step b) of claim 1, the method is stopped and/or a signal representing a first pneumatic brake line (28) and a second pneumatic brake line (30) that are both leak-free is generated.

4. A method according to any one of the preceding claims, **characterised in that** if a variation greater than or equal to the predetermined permitted variation between the target brake pressure represented by the brake signal and the actual brake pressure detected by the pressure sensor is determined during step d) of claim 1, the method is stopped and/or a signal representing a first pneumatic brake line (28) and a second pneumatic brake line (30) is generated, at least one of these pneumatic brake lines (28, 30) having a leak in a section (28a, 30a) located upstream of the associated ABS pressure-control valve (32, 34) when seen from the pressure-control module (4).

5. A method according to any one of the preceding claims, **characterised in that** if a variation less than the predetermined permitted variation between the target brake pressure represented by the brake signal and the actual brake pressure detected by the pressure sensor is determined during step f) of claim 1, a signal representing a first pneumatic brake line (28) that has no leak is generated.

6. A method according to any one of the preceding claims, **characterised in that** if a variation greater than or equal to the predetermined permitted variation between the target brake pressure represented by the brake signal and the actual brake pressure detected by the pressure sensor is determined during step f) of claim 1, a signal representing a first pneumatic brake line (28) that has a leak (42) in a section (28b) located downstream of the first ABS pressure-control valve (32) when seen from the pressure-control module (4) is generated.

7. A method according to any one of the preceding claims, **characterised in that** if a variation less than the predetermined permitted variation between the target brake pressure represented by the brake signal and the actual brake pressure detected by the pressure sensor is determined during step h) of claim 1, a signal representing a second pneumatic brake line (30) that has no leak is generated.

8. A method according to any one of the preceding claims, **characterised in that** if a variation greater than or equal to the predetermined permitted variation between the target brake pressure represented by the brake signal and the actual brake pressure detected by the pressure sensor is determined during step h) of claim 1, a signal representing a second brake line (30) that has a leak in a section (30b) located downstream of the second ABS pressure-control valve (34) when seen from the pressure-control module (4) is generated.

9. A method according to any one of the preceding claims, **characterised in that** the brake signal is generated automatically on the basis of a braking-requirement signal generated in an electrical channel (6) of a foot-brake value transmitter (8) or by a driver assistance system.

10. An electro-pneumatic brake device of a vehicle, having an ABS control system and comprising at least the following:
- at least one electronic controller (10),
- at least one pressure-control module (4) with at least one channel that has at least two outlets, namely a first outlet (18) and a second outlet (20),
- at least two brake cylinders, namely a first brake cylinder (12) and a second brake cylinder (14),
- at least two brake lines, namely a first pneumatic brake line (28) and a second pneumatic brake line (30), the first pneumatic brake line (28) running between the first outlet (18) of the channel of the pressure-control module (4) and the first pneumatic brake cylinder (12), and the second pneumatic brake line (30) running between the second outlet (20) of the channel of the pressure-control module (4) and the second pneumatic brake cylinder (14),
- at least two ABS pressure-control valves, namely a first ABS pressure-control valve (32) and a second ABS pressure-control valve (34), the first ABS pressure-control valve (32) being arranged in the first pneumatic brake line (28) and the second ABS pressure-control valve (34) being arranged in the second pneumatic brake line (30) and it being possible for the electronic controller (10) to switch the ABS pressure-control valves (32, 34) independently to the "maintain pressure", "decrease pressure" and "increase pressure" states,
- at least one pressure sensor that detects an actual brake pressure sent to the first and second pneumatic brake lines (28, 30) by the pressure-control module (4) and sends a pressure signal representing this actual brake pressure to the electronic controller (10), the pressure sensor being located upstream of the first and second ABS pressure-control valves (32, 34) when seen from the pressure-control module (4), and
- the pressure-control module (4) sending the actual brake pressure to the pneumatic brake lines (28, 30) in response to a brake signal representing a target brake pressure,
**characterised in that** an algorithm for detecting and reducing the negative consequences of a leak, which is implemented in the electronic controller (10) or in a further controller different to the electronic controller (10), is provided in at least one of the pneumatic brake lines (28, 30) and is designed so as to carry out at least the following steps:
a) when at a standstill or driving, a brake signal is sent to the pressure-control module (4), and when the ABS control system is inactive
b) a variation between the target brake pressure represented by the brake signal and the actual brake pressure detected by the pressure sensor is determined and if it is ascertained that the variation thus determined is greater than or equal to a predetermined permitted variation,
c) the first ABS pressure-control valve (32) and the second ABS pressure-control valve (34) are then switched to the "maintain pressure" state, and
d) the variation between the target brake pressure represented by the brake signal and the actual brake pressure detected by the pressure sensor is then determined and if it is ascertained that the variation thus determined is less than the predetermined permitted variation,
e) the first ABS pressure-control valve (32) is then switched to the "increase pressure" state and the second ABS pressure-control valve (34) is held in the "maintain pressure" state or switched to the "maintain pressure" state, and
f) if it is then ascertained that there is a variation between the target brake pressure represented by the brake signal and the actual brake pressure detected by the pressure sensor that is greater than or equal to the predetermined permitted variation, the first ABS pressure-control valve (32) is switched then to the "maintain pressure" state, and
g) the second ABS pressure-control valve (34) is switched to the "increase pressure" state and the first ABS pressure-control valve (32) is held in the "maintain pressure" state or switched to the "maintain pressure" state, and
h) if it is then ascertained that there is a variation between the target brake pressure represented by the brake signal and the actual brake pressure detected by the pressure sensor that is greater than or equal to the predetermined permitted variation, then the second ABS pressure-control valve (34) is switched to the "maintain pressure" state.

11. A brake device according to claim 10, **characterised in that** the algorithm implemented in the electronic controller (10) or in the further controller different to the electronic controller (10) is designed such that if a variation less than the predetermined permitted variation between the target brake pressure represented by the brake signal and the actual brake pressure detected by the pressure sensor is determined during step b) of claim 9, the method is stopped /or a signal representing a first pneumatic brake line (28) and a second pneumatic brake line (30) that are both leak-free is generated.

12. A brake device according to either claim 10 or 11, **characterised in that** the algorithm implemented in the electronic controller (10) or in the further controller different to the electronic controller (10) is designed such that if a variation greater than or equal to the predetermined permitted variation between the target brake pressure represented by the brake signal and the actual brake pressure detected by the pressure sensor is determined during step d) of claim 10, the method is stopped and/or a signal representing a first pneumatic brake line (28) and a second pneumatic brake line (30) is generated, at least one of these pneumatic brake lines (28, 30) having a leak in a section (28a, 30a) located upstream of the associated ABS pressure-control valve (32, 34) when seen from the pressure-control module (4).

13. A brake device according to any one of claims 10 to 12, **characterised in that** the algorithm implemented in the electronic controller (10) or in the further controller different to the electronic controller (10) is designed such that if a variation less than the predetermined permitted variation between the target brake pressure represented by the brake signal and the actual brake pressure detected by the pressure sensor is determined during step f) of claim 10, a signal representing a first pneumatic brake line (28) that has no leak is generated.

14. A brake device according to any one of claims 10 to 13, **characterised in that** the algorithm implemented in the electronic controller (10) or in the further controller different to the electronic controller (10) is designed such that if a variation greater than or equal to the predetermined permitted variation between the target brake pressure represented by the brake signal and the actual brake pressure detected by the pressure sensor is determined during step f) of claim 10, a signal representing a first brake line (28) that has a leak (42) in a section (28b) located downstream of the first ABS pressure-control valve (32) when seen from the pressure-control module (4) is generated.

15. A brake device according to any one of claims 10 to 14, **characterised in that** the algorithm implemented in the electronic controller (10) or in the further controller different to the electronic controller (10) is designed such that if a variation less than the predetermined permitted variation between the target brake pressure represented by the brake signal and the actual brake pressure detected by the pressure sensor is determined during step h) of claim 10, a signal representing a second pneumatic brake line (30) that has no leak is generated.

16. A brake device according to any one of claims 10 to 15, **characterised in that** the algorithm implemented in the electronic controller (10) or in the further controller different to the electronic controller (10) is designed such that if a variation greater than or equal to the predetermined permitted variation between the target brake pressure represented by the brake signal and the actual brake pressure detected by the pressure sensor is determined during step h) of claim 10, a signal representing a second brake line (30) that has a leak in a section (30b) located downstream of the second ABS pressure-control valve (34) when seen from the pressure-control module (4) is generated.

17. A brake device according to any one of claims 10 to 16, **characterised in that** the signal is stored in a readable memory and/or shown on a display.

18. A brake device according to any one of claims 10 to 17, **characterised in that** the algorithm is implemented in the electronic controller (10) that open- or closed-loop controls brake functions and/or the ABS control system in the pressure-control module (4) and is integrated in the pressure-control module (4).

19. A brake device according to any one of claims 10 to 18, **characterised in that** it is an electronically closed-loop controlled brake system with brake pressure regulation (EBS).

20. A vehicle with a brake device according to any one of claims 10 to 19.

## Revendications

1. Procédé de détection et d'amoindrissement des conséquences négatives d'une fuite dans une conduite (28, 30) pneumatique de frein d'un système (1) de freinage électropneumatique ayant une régulation ABS, qui a au moins ce qui suit :
- au moins un appareil (10) électronique de commande,
- au moins un module (4) de régulation de la pression ayant au moins un conduit, qui a au moins deux sorties, une première sortie (18) et une deuxième sortie (20),
- au moins deux cylindres de frein, un premier cylindre (12) de frein et un deuxième cylindre (14) de frein,
- au moins deux conduites de frein, une première conduite (28) pneumatique de frein et une deuxième conduite (30) pneumatique de frein, la première conduite (28) pneumatique de frein étant tirée entre la première sortie (18) du conduit du module (4) de régulation de la pression et le premier cylindre (12) pneumatique de frein et la deuxième conduite (30) pneumatique de frein entre la deuxième sortie (20) du conduit du module (4) de régulation de la pression et le deuxième cylindre (14) pneumatique de frein,
- au moins deux soupapes de commande de pression ABS, une première soupape (32) de commande de pression ABS et une deuxième soupape (34) de commande de pression ABS, la première soupape (32) de commande de pression ABS étant montée dans la première conduite (28) pneumatique de frein et la deuxième soupape (34) de commande de pression ABS dans la deuxième conduite (30) pneumatique de frein et les soupapes (32, 34) de commande de pression ABS pouvant être commandées par l'appareil (10) électronique de commande indépendamment de l'état « maintien de la pression », « suppression de la pression » et « établissement de la pression »,
- au moins un capteur de pression, qui relève une pression de frein réelle commandée par le module (4) de régulation de la pression dans la première et la deuxième conduite (30) pneumatique de frein et entre dans l'appareil (10) électronique de commande un signal de pression représentant la pression de frein réelle, le capteur de pression étant monté, considéré à partir du module (4) de régulation de la pression, avant la première et la deuxième soupape (32, 34) de commande de la pression ABS, et dans lequel
- le module (4) de régulation de la pression entre dans les conduites (28, 30) pneumatiques de frein la pression de frein réelle sur un signal de frein représentant la pression de frein de consigne,
**caractérisé par** au moins le stade suivant :
a) à l'arrêt ou pendant la marche, on entre un signal de frein dans le module (4) de régulation de la pression et, si la régulation ABS est inactive,
b) on détermine un écart entre la pression de frein de consigne représentée par le signal de frein et la pression de frein réelle relevée par le capteur de pression et si l'on constate que l'écart ainsi déterminé est supérieur ou égal à un écart autorisé donné à l'avance, alors
c) on met la première soupape (32) de commande de la pression ABS et la deuxième soupape (34) de commande de la pression ABS dans l'état « maintien de la pression » et alors
d) si l'on détermine l'écart entre la pression de frein de consigne représentée par le signal de frein et la pression de frein réelle relevée par le capteur de pression et si l'on constate que l'écart ainsi déterminé est plus petit que l'écart autorisé donné à l'avance, alors
e) on met la première soupape (32) de commande de la pression ABS dans l'état « établissement de la pression » et on maintient la deuxième soupape (34) de commande de la pression ABS dans l'état « maintien de la pression » ou on la met dans l'état « maintien de la pression » et
f) si l'on constate alors qu'il y a un écart entre la pression de frein de consigne représentée par le signal de frein et la pression de frein réelle relevée par le capteur de pression, qui est supérieur ou égal à l'écart autorisé donné à l'avance, alors on met la première soupape (32) de commande de la pression ABS dans l'état « maintien de la pression », et alors
g) on met la deuxième soupape (34) de la commande de la pression ABS dans l'état « établissement de la pression » et on maintient la première soupape (32) de la pression ABS dans l'état « maintien de la pression » ou on la met dans l'état « maintien de la pression » et
h) si l'on constate alors qu'il y a un écart entre la pression de frein de consigne représentée par le signal de frein et la pression de frein réelle relevée par le capteur de pression, qui est supérieur ou égal à l'écart autorisé donné à l'avance, alors on met la deuxième soupape (34) de commande de la pression ABS dans l'état « maintien de la pression ».

2. Procédé suivant la revendication 1, **caractérisé en ce que** pendant au moins l'un des stades c) et g) de la revendication 1, on entre le signal de frein à nouveau dans le module (4) de régulation de la pression.

3. Procédé suivant l'une des revendications précédentes, **caractérisé en ce que** si, pendant le stade b) de la revendication 1, on détermine un écart entre la pression de frein de consigne représentée par le signal de frein et la pression de frein réelle relevée par le capteur de pression, qui est plus petit que l'écart autorisé donné à l'avance, on met fin au procédé et/ou on produit un signal qui représente une première conduite (28) pneumatique de frein et une deuxième conduite (30) pneumatique de frein, qui sont chacune exemptes de fuite.

4. Procédé suivant la revendication 1, **caractérisé en ce que** si pendant le stade d) de la revendication 1, on détermine un écart entre la pression de frein de consigne représentée par le signal de frein et la pression de frein réelle relevée par le capteur de pression, qui est supérieur ou égal à l'écart autorisé donné à l'avance, on met fin au procédé et/ou on produit un signal, qui représente une première conduite (28) pneumatique de frein et une deuxième conduite (30) pneumatique de frein dont au moins une conduite (28, 30) pneumatique de frein a une fuite dans un tronçon (28a, 30a) en amont de la soupape (32, 34) de commande de la pression ABS associée considéré à partir du module (4) de régulation de la pression.

5. Procédé suivant l'une des revendications précédentes, **caractérisé en ce que,** si, pendant le stade f) de la revendication 1, on détermine un écart entre la pression de frein de consigne représentée par le signal de frein et la pression de frein réelle relevée par les capteurs de pression, qui est plus petit que l'écart autorisé donné à l'avance, on produit un signal, qui représente une première conduite (28) pneumatique de frein qui n'a pas de fuite.

6. Procédé suivant l'une des revendications précédentes, **caractérisé en ce que,** si, pendant le stade f) de la revendication 1, on détermine un écart entre la pression de frein de consigne représentée par le signal de frein et la pression de frein réelle relevée par le capteur de pression, qui est supérieur ou égal à l'écart autorisé donné à l'avance, on produit ainsi un signal qui représente une première conduite (28) de frein, qui a une fuite (42) dans un tronçon (28b) en aval de la première soupape (32) de commande de la pression ABS, considéré à partir du module (4) de régulation de la pression.

7. Procédé suivant l'une des revendications précédentes, **caractérisé en ce que,** si, pendant le stade h) de la revendication 1, on détermine un écart entre la pression de frein de consigne représentée par le signal de frein et la pression de frein réelle relevée par le capteur de pression, qui est inférieur à l'écart autorisé donné à l'avance, on produit un signal, qui représente une deuxième conduite (30) de pneumatique de frein, qui n'a pas de fuite.

8. Procédé suivant l'une des revendications précédentes, **caractérisé en ce que,** si, pendant le stade h) de la revendication 1, on détermine un écart entre la pression de frein de consigne représentée par le signal de frein et la pression de frein réelle relevée par le capteur de pression, qui est supérieur ou égal à l'écart autorisé, on produit un signal, qui représente une deuxième conduite (30) de frein, qui a une fuite dans un tronçon (30b) en aval de la deuxième soupape (34) de commande de la pression ABS considéré à partir du module (4) de régulation de la pression.

9. Procédé suivant l'une des revendications précédentes, **caractérisé en ce que** l'on produit automatiquement le signal de frein sur la base d'un signal de demande de freinage produit dans une ligne (6) électrique d'un indicateur (8) de valeur de frein au pied ou par un système d'assistance à la conduite.

10. Système de freinage électropneumatique ayant un système de régulation ABS d'un véhicule, qui a au moins ce qui suit :
- au moins un appareil (10) électronique de commande,
- au moins un module (4) de régulation de la pression ayant au moins un conduit, qui a au moins deux sorties, une première sortie (18) et une deuxième sortie (20)
- au moins deux cylindres de frein, un premier cylindre (12) de frein et un deuxième cylindre (14) de frein,
- au moins deux conduites de frein, une première conduite (28) pneumatique de frein et une deuxième conduite (30) pneumatique de frein, la première! conduite (28) pneumatique de frein étant tirée entre la première sortie (18) du conduit du module (4) de régulation de la pression et le premier cylindre (12) pneumatique de frein et la deuxième conduite (30) pneumatique de frein entre la deuxième sortie (20) du conduit du module (4) de régulation de la pression et le deuxième cylindre (14) pneumatique de frein,
- au moins deux soupapes de commande de pression ABS, une première soupape (32) de commande de pression ABS et une deuxième soupape (34) de commande de pression ABS, la première soupape (32) de commande de pression ABS étant montée dans la première conduite (28) pneumatique de frein et la deuxième soupape (34) de commande de pression ABS dans la deuxième conduite (30) pneumatique de frein et les soupapes (32, 34) de commande de pression ABS pouvant être commandées par l'appareil (10) électronique de commande indépendamment de l'état « maintien de la pression », « suppression de la pression » et « établissement de la pression »,
- au moins un capteur de pression qui relève une pression de frein réelle commandée par le module (4) de régulation de la pression dans la première et la deuxième conduite (30) pneumatique de frein et entre dans l'appareil (10) électronique de commande un signal de pression représentant la pression de frein réelle, le capteur de pression étant monté, considéré à partir du module (4) de régulation de la pression, avant la première et la deuxième soupape (32, 34) de commande de la pression ABS, et dans lequel
- le module (4) de régulation de la pression entre dans les conduites (28, 30) pneumatiques de frein, la pression de frein réelle sur un signal de frein représentant la pression de frein de consigne,
**caractérisé en ce qu'il** est prévu un algorithme, mis en œuvre dans l'appareil (10) électronique de commande ou dans un autre appareil de commande distinct de l'appareil (10) électronique de commande, de détection et d'amoindrissement des conséquences négatives d'une fuite dans au moins l'une des conduites (28, 30) pneumatiques de frein, qui est constitué pour réaliser au moins les stades suivants :
a) à l'arrêt ou pendant la marche, on entre un signal de frein dans le module (4) de régulation de la pression et, si la régulation ABS est inactive,
b) on détermine un écart entre la pression de frein de consigne représentée par le signal de frein et la pression de frein réelle relevée par le capteur de pression et si l'on constate que l'écart ainsi déterminé est supérieur ou égal à un écart autorisé donné à l'avance, alors
c) on met la première soupape (32) de commande de la pression ABS et la deuxième soupape (34) de commande de la pression ABS dans l'état « maintien de la pression » et alors
d) si l'on détermine l'écart entre la pression de frein de consigne représentée par le signal de frein et la pression de frein réelle relevée par le capteur de pression et si l'on constate que l'écart ainsi déterminé est plus petit que l'écart autorisé donné à l'avance, alors
e) on met la première soupape (32) de commande de la pression ABS dans l'état « établissement de la pression » et on maintient la deuxième soupape (34) de commande de la pression ABS dans l'état « maintien de la pression » ou on la met dans l'état « maintien de la pression » et
f) si l'on constate alors qu'il y a un écart entre la pression de frein de consigne représentée par le signal de frein et la pression de frein réelle relevée par le capteur de pression, qui est supérieur ou égal à l'écart autorisé donné à l'avance, alors on met la première soupape (32) de commande de la pression ABS dans l'état « maintien de la pression »,
g) on met la deuxième soupape (34) de la commande de la pression ABS dans l'état « établissement de la pression » et on maintient la première soupape (32) de la pression ABS dans l'état « maintien de la pression » ou on la met dans l'état « maintien de la pression » et
h) si l'on constate alors qu'il y a un écart entre la pression de frein de consigne représentée par le signal de frein et la pression de frein réelle relevée par le capteur de pression, qui est supérieur ou égal à l'écart autorisé donné à l'avance, alors on met la deuxième soupape (34) de commande de la pression ABS dans l'état « maintien de la pression ».

11. Système de freinage suivant la revendication 10, **caractérisé en ce que** l'algorithme, mis en œuvre dans l'appareil (10) électronique de commande ou dans un autre appareil électronique de commande distinct de l'appareil (10) électronique de commande, est constitué pour, si, pendant le stade b) de la revendication 9, on détermine un écart entre la pression de frein de consigne représentée par le signal de frein et la pression de frein réelle relevée par le capteur de pression, qui est plus petit que l'écart autorisé donné à l'avance, mettre fin au procédé et/ou produire un signal, qui représente une première conduite (28) pneumatique de frein et une deuxième conduite (30) pneumatique de frein, qui sont chacune exemptes de fuite.

12. Système de freinage suivant l'une des revendications 10 ou 11, **caractérisé en ce que** l'algorithme, mis en œuvre dans l'appareil (10) électronique de commande ou dans un autre appareil électronique de commande distinct de l'appareil (10) électronique de commande, est constitué pour, si, pendant le stade de la revendication 10, on détermine un écart entre la pression de frein de consigne représentée par le signal de frein et la pression de frein réelle relevée par le capteur de pression, qui est supérieure ou égal à l'écart autorisé donné à l'avance, mettre fin au procédé et/ou produire un signal, qui représente une première conduite (28) pneumatique de frein et une deuxième conduite (30) pneumatique de frein, dont au moins une conduite (28, 30) pneumatique de frein a une fuite, dans un tronçon (28a, 30a) en amont de la soupape (32, 34) de commande de la pression ABS associée considéré à partir du module (4) de régulation de la pression.

13. Système de freinage suivant l'une des revendications 10 à 12, **caractérisé en ce que** l'algorithme, mis en œuvre dans l'appareil (10) électronique de commande ou dans un autre appareil électronique de commande distinct de l'appareil (10) électronique de commande, est constitué pour, si, pendant le stade f) de la revendication 10, on constate un écart entre la pression de frein de consigne représentée par le signal de frein et la pression de frein réelle relevée par les capteurs de pression, qui est plus petit que l'écart autorisé donné à l'avance, produire un signal, qui représente une première conduite (28) pneumatique de frein qui n'a pas de fuite.

14. Système de freinage suivant l'une des revendications 10 à 13, **caractérisé en ce que** l'algorithme mis en œuvre dans l'appareil (10) électronique de commande ou dans un autre appareil électronique de commande distinct de l'appareil (10) électronique de commande, est constitué pour, si, pendant le stade f) de la revendication 10, on détermine un écart entre la pression de frein de consigne représentée par le signal de frein et la pression de frein réelle relevée par le capteur de pression, qui est supérieur ou égal à l'écart autorisé donné à l'avance, produire ainsi un signal qui représente une première conduite (28) de frein, qui a une fuite (42) dans un tronçon (28b) en aval de la première soupape (32) de commande de la pression ABS, considéré à partir du module (4) de régulation de la pression.

15. Système de freinage suivant l'une des revendications 10 à 14, **caractérisé en ce que** l'algorithme, mis en œuvre dans l'appareil (10) électronique de commande ou dans un autre appareil électronique de commande distinct de l'appareil (10) électronique de commande, est constitué pour, si, pendant le stade h) de la revendication 10, on constate un écart entre la pression de frein de consigne représentée par le signal de frein et la pression de frein réelle relevée par le capteur de pression, qui est inférieur à l'écart autorisé donné à l'avance, produire un signal, qui représente une deuxième conduite (30) de pneumatique de frein, qui n'a pas de fuite.

16. Système de freinage suivant l'une des revendications 10 à 15, **caractérisé en ce que** l'algorithme, mis en œuvre dans l'appareil (10) électronique de commande ou dans un autre appareil électronique de commande distinct de l'appareil (10) électronique de commande, est constitué pour, si, pendant le stade h) de la revendication 10, on détermine un écart entre la pression de frein de consigne représentée par le signal de frein et la pression de frein réelle relevée par le capteur de pression, qui est supérieur ou égal à l'écart autorisé, produire un signal, qui représente une deuxième conduite (30) de frein, qui a une fuite dans un tronçon (30b) en aval de la deuxième soupape (34) de commande de la pression ABS considéré à partir du module (4) de régulation de la pression.

17. Système de freinage suivant l'une des revendications 10 à 16, **caractérisé en ce que** le signal est mis en mémoire, dans une mémoire déchiffrable et/ou est représenté sur un affichage.

18. Système de freinage suivant l'une des revendications 10 à 17, **caractérisé en ce que** l'algorithme est mis en œuvre dans l'appareil (10) électronique de commande qui régule ou commande, dans le module (4) de régulation de la pression, des fonctions de freinage et/ou la régulation ABS et est intégré au module (4) de régulation de la pression.

19. Système de freinage suivant l'une des revendications 10 à 18, **caractérisé en ce que** c'est un système de frein réglé électroniquement, ayant une régulation de la pression de frein EBS.

20. Véhicule ayant un système de freinage suivant l'une des revendications 10 à 19.
